# EUROPEAN PATENT APPLICATION

(11) **EP 1 435 549 A1**
(43) Date of publication of application: **07.07.2004**
(21) Application number: 03258177.9
(22) Date of filing: 24.12.2003
(51) Int. Cl.: G05B 19/409

(54) **Configurable user interface for a numerical controller**

(30) Priority: 26.12.2002 JP 2002376617
(71) Applicant: FANUC LTD, Minamitsuru-gun, Yamanashi 401-0597 (JP)
(72) Inventor: Sagara, Shouichi, Minamitsuru-gun Yamanashi 401-0511 (JP); Kato, Tomokazu, Higashiyatsushiro-gun Yamanashi 400-1506 (JP); Yamada, Hiroshi, c/o Room 12-605 FANUC, Minamitsuru-gun, Yamanashi 401-0511 (JP)
(74) Representative: Billington, Lawrence Emlyn

(57) **Abstract**

A numerical controller capable of easily changing a user interface to be customized. User interface elements are stored in user interface element storage means. User interface definition storage means stores definition information on a combination of the user interface elements and properties such as positions and sized of the user interface elements. When a user interface picture is selected through selecting means, the user interface definition information for the selected user interface picture is read and interpreted by interpretation means and the user interface elements are read from the user interface element storage means based on a result of the interpretation. The read user interface elements are displayed on a display screen in accordance with the properties defined for the respective elements. The user interface can be easily changed by editing the use interface definition information stored in the user interface definition storage means.

## Description

### BACKGROUND OF THE INVENTION

### 1. Field of the Invention

The present invention relates to a numerical controller, and more particularly to a user interface of the numerical controller.

### 2. Description of Related Art

A definition of the user interface of the numerical controller is carried out using source codes. Therefore, it is necessary to write source codes of a user interface for constructing the user interface, to require a considerable time. Further, in order to modify the constructed user interface, it is necessary to modify the source codes and re-create system files of the numerical controller by compiling and linking the source codes even if a slight change of the user interface is required.

Further, it is necessary to prepare a customizing application software in order to customize the user interface, and an environment for writing source codes and compiling and linking to create the user application software.

As described, the user interface is defined by source codes, it is impossible to perform addition or change in the user interface without the specific environment of hardware and software for editing the source codes and constructing system files. Thus, in order to prepare a user interface specifically customized for the user, it is necessary to prepare the specific environments for customization to require complicated operations.

It has been desired to provide a method of easily constructing a user interface without altering the system files in view of improvement of productivity of constructing the user interface of the numerical controller. Since the user interface is directly concerned with users, requests of customizing the user interface have been made to makers of machine tools using the numerical controllers.

### SUMMARY OF THE INVENTION

The present invention provides a numerical controller capable of easily customizing a user interface.

A numerical controller of the present invention comprises: user interface element storage means storing a plurality of user interface elements for constituting the user interface; user interface definition information storage means for storing user interface definition information on a combination of the user interface elements and properties of the user interface elements; user interface definition information interpreting means for interpreting the user interface definition information; user interface element selecting means for selecting user interface elements stored in the user interface element storage means in accordance with a result of interpretation of the user interface definition information by the user interface definition information interpreting means; and user interface element display means for displaying the selected user interface elements in accordance with a result of interpretation of the user interface definition information by the user interface definition interpretation means. With the above arrangement, the user interface is easily changed to be customized.

The user interface definition information may be stored as a user interface definition file. This user interface definition information may comprise user interface element selecting information including identifiers of the user interface element to be selected, and user interface element property information including information on positions and sizes of the user interface elements to be displayed.

The numerical controller may further comprise means for inputting the user interface definition information from an external device to the numerical controller and for outputting the user interface definition information from the numerical controller to the external device, so that the user interface definition information may be edited by the external device. Also, the numerical controller may further comprise editing means for editing the user interface definition information, so that the user interface definition information may be edited by the editing means provided in the numerical controller.

### BRIEF DESCRIPTION OF THE DRAWINGS

FIG. 1 is a functional block diagram of a numerical controller according to an embodiment of the present invention;
FIG. 2 is a diagram showing an example of a user interface picture on a display device for constituting a user interface of the numerical controller;
FIG. 3 is a schematic block diagram of a hardware configuration of the numerical controller; and
FIG. 4 is a flowchart of processing for displaying the user interface picture to be performed by a processor of the numerical controller.

### DETAILED DESCRIPTION

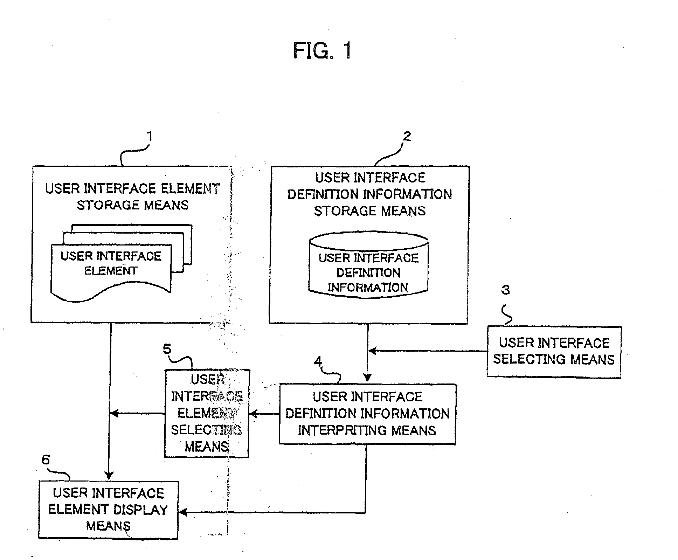

In a functional diagram of a numerical controller as shown in FIG. 1, user interface elements for constructing user interfaces are stored in user interface element storage means 1. Sets of identifiers of the user interface elements designating combinations of the user interface elements for use in constructing respective user interfaces, and properties of the designated user interface elements including a position, a size (width and height) of each element on a display screen, a stereo graphical property of relief or engrave, a font, a position (left, center, right, etc.) and a size of each character to be added to an associated element, etc. are defined for each user interface picture and stored in user interface definition information storage means 2 as user interface definition files.

When an initial user interface picture is selected automatically after a power supply of the numerical controller is turned on, and also when another user interface picture is selected by user interface selecting means 3 thereafter, user interface definition information interpreting means 4 reads the user interface definition information for the selected user interface picture and interprets the read information and outputs identifiers of the user interface elements necessary for the user interface picture to user interface element selecting means 5 on the basis of the interpretation. The user interface element selecting means 5 selects and reads the necessary user interface elements from the user interface element storage means 1 in accordance with the received identifier information. The user interface element displaying means 6 displays the selected user interface elements on the display screen in accordance with the definition information (property information) interpreted by the user interface definition information interpreting means 4.

As described, since the user interlace picture is constructed based on the user interface definition information stored in the user interface definition information storage means 2, any desired customizing of user interface picture can be formed by merely editing the user interface definition information stored in the user interface definition information storage means 2.

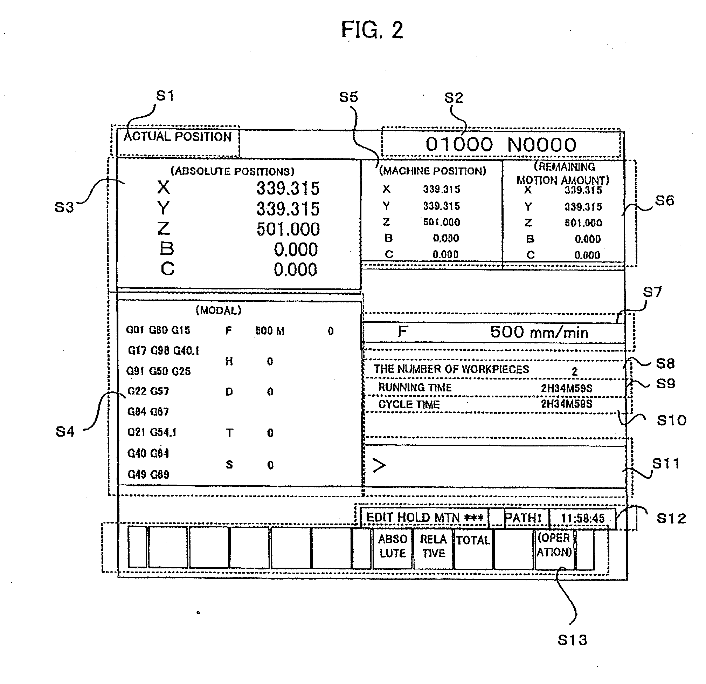

FIG. 2 shows an example of a user interface picture displayed on the display device according to the above-described arrangement. The user interface elements will be described in detail referring to FIG. 2.

In FIG. 2, areas enclosed by dotted lines are respective user interface elements displayed on the display screen. In this example, the user interface elements are a title display element S1, a program number/sequence number display element S2, an absolute coordinate value display element S3, a modal information display element S4, a machine coordinate value display element S5, a remaining motion amount display element S6, a feed speed display element S7, a display element S8 for displaying the number of workpieces to be machined, a running time display element S9, a cycle time display element S10, a key-in buffer element S11, a CNC status display element S12, a soft-key display element S13.

The above display elements are selected from the user interface elements stored in the user interface element storage means 1 in accordance with designated combination of these display elements by identifiers, and displayed in accordance with properties such as positions and sizes of the respective display elements on the display screen stored in the user interface definition information storage means 2 as the user interface definition information. In order to modify the user interface by changing the user interface picture, it is only required to change the user interface definition information stored in the user interface definition means 2, to easily customize the user interface.

In this embodiment, the user interface definition information is defined using XML as a data description language. For example, the property definition of the display element of the absolute coordinate value is defined as follows;

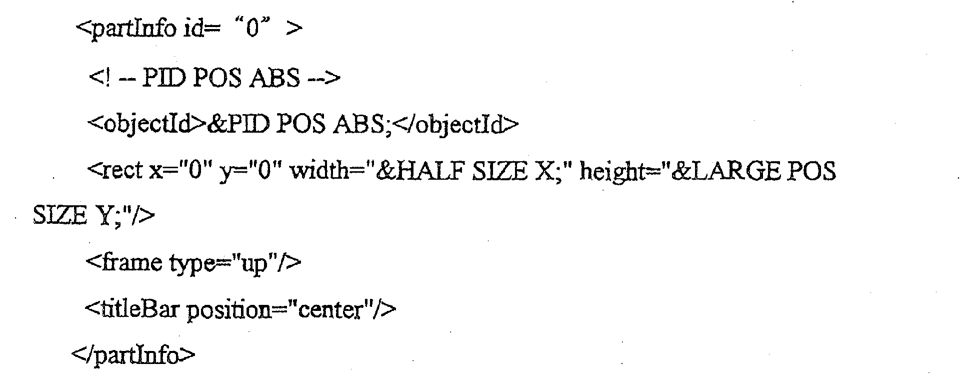

In the above definition, <objectId> is information for selecting the user interface elements, and "&PID POS ABS" is an identifier of the absolute coordinate value display element.
<rect x="0" y="0" width="&HALF SIZE X;" height="&LARGE POS SIZE Y;"/> is information on positions and sizes of the user interface elements, and x="0" y="0" indicates positioning the absolute display element at an x-coordinate of "0" and a y-coordinate of "0", and width="&HALF SIZE X;" height="&LARGE POS SIZE Y;" defines the width and the height.
<frame type="up"/> is information on the stereo graphic display of the user interface elements, and "up" means a relief display. A description of "down" means an engrave display and a description of "flat" is used for a flat display.
<titleBar position="center"/> is information on display position of the title of the user interface and "center" means display the title at the center of the display screen. An indication "left" is used at the left position and "right" is used for the right position.

The modal information display element is defined as follows for example;

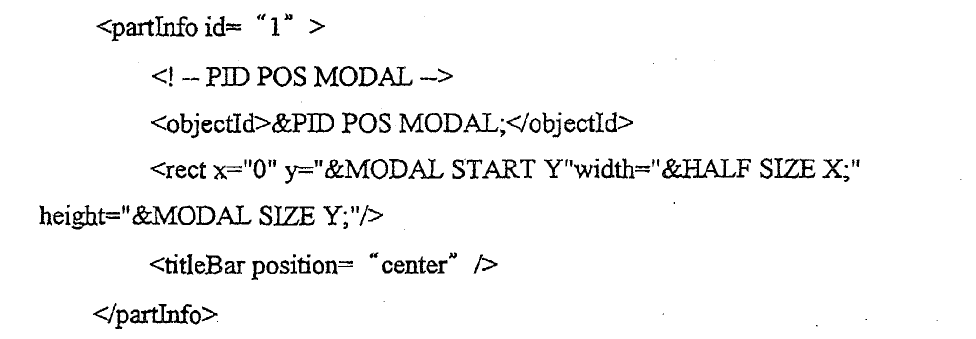

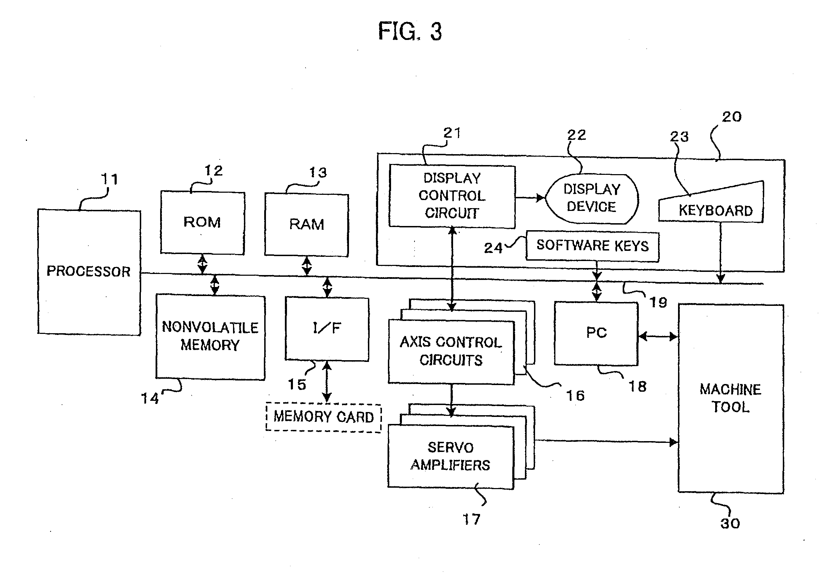

FIG. 3 shows a hardware configuration of the numerical controller according to the embodiment of the present invention.

The hardware configuration of the numerical controller is constituted with a processor 11 as a main component. The processor 11 is connected with a ROM 12, a RAM 13, a nonvolatile memory 14, axis control circuits 16 for controlling respective axes of a machine tool 30, a programmable controller (PC) 18, and a display/MDI unit 20 through a bus 19. The processor 11 generally controls the numerical controller according to a system program stored in the ROM 12.

SRAM is used for the RAM 13 for temporary storage of calculation data, display data, input/output signals, etc. The nonvolatile memory 14 is constituted by CMOS which is backed up by a battery not shown so as to retain stored information even when a power supply is turned off. The information stored in the nonvolatile memory 14 includes parameters, machining programs and the user interface definition information specifically in accordance with the present invention. The nonvolatile memory 14 functions as the user interface information storage means 2 shown in FIG. 1. The ROM 12 stores the user interface elements and functions as the user interface element storage means 1 shown in FIG. 1.

A display control circuit 21 of the display/MDI unit 20 transforms digital signals of numeral data and graphic data into raster signals suitable for display and the transformed signals are sent to a display device 22 so that numeral values and graphics are displayed on the display device 22. Particularly in accordance with the present invention, the display control circuit 21 makes displays for the user interface on the display device 22. The display device 22 may be a CRT or a liquid crystal display. The display control circuit 21 and the display device 22 constitute the user interface element display means 6 shown in FIG. 1.

A keyboard 23 has numeral keys, symbolic keys, character keys and function keys for use in creation, editing of machining programs and manual input of various commands. The software keys 24 are placed below the display device 22 and functions the respective software keys 24 are indicated on the display device. The functions of the function keys may be changed in accordance with the indications on the display device 22. In this embodiment, the keyboard 23 and the software keys 24 constitute the user interface picture selecting means 3.

An interface 15 is provided for reading and storing the user interface definition file in the nonvolatile memory 14 from outside of the numerical controller, as described later.

The axis control circuits 16 receive motion commands for respective axes from the processor 11 and outputs torque commands to the servo amplifiers 17. The servo amplifiers 17 drives servomotors of respective axes of the machine tool 30 in accordance with the torque commands to control a relative motion of the tool and a workpiece. The axis control circuits 16 and the servo amplifiers 17 are provided by the number of servomotors provided in the machine tool 30.

The PC (programmable controller) 18 receives M (miscellaneous) function signals, S (spindle speed) function signals, etc. and controls various actuators in the machine tool 30. The PC 18 also receives signals from switches of an operation panel and limit switches of the machine tool 30 and performs sequential processing and transfers necessary input signals to the processor 11 through the bus 19.

In FIG. 3, a spindle motor control circuit and a spindle motor amplifier are not shown. The above numerical controller has hardware configuration same as the conventional one, but differs from the conventional one in that the user interface definition information storage section is provided in the nonvolatile memory 14, and the user interface definition information stored in the user interface definition information storage section is changeable, and that the user interface picture is made in accordance with the user interface definition information, as described later.

When the user interface is to be changed, the definition file containing the definition information on the user interface elements is read from the nonvolatile memory 14 and the read definition file is outputted to a memory card through the interface 15. The user interface definition information stored in the memory card is edited by an external device such as a personal computer. The editing of the user interface definition information is carried out by defining combinations of the user interface elements to be used for the user interface pictures and properties of the respective user interface elements (positions, widths, heights, stereo graphics of relief or engrave display, fonts and positions and sizes of characters to be associated with the display elements).

After the editing is completed, the user interface definition information is read from the memory card and stored in the use interface definition information storage section in the nonvolatile memory 14. Thus, the user interface pictures are displayed on the display device 22 on the basis of the renewed user interface definition information stored in the nonvolatile memory 14.

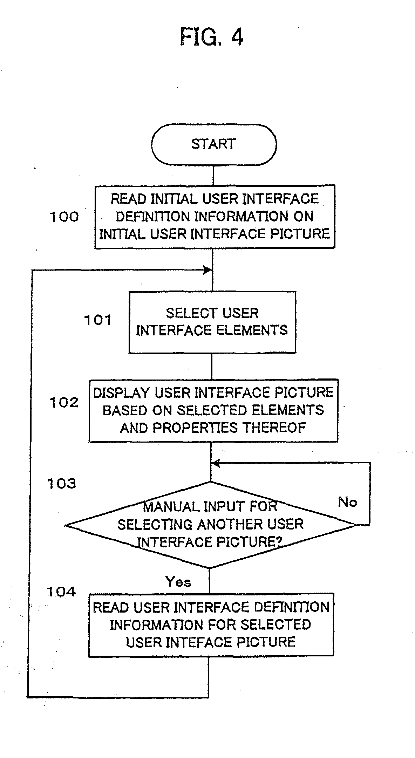

The processing for displaying the user interface pictures to be performed by the processor 11 according to the embodiment will be described referring to FIG. 4.

When the power supply is turned on, the processor 11 first reads the user interface definition information for an initial user interface picture stored in the user interface definition information storage section in the nonvolatile memory 14 (Step 100). The processor 11 interprets the read definition information and selects and reads the user interface elements designated by identifiers from the user interface element storage section in the ROM 12 (Step 101), and makes the initial user interface picture on the display device 22 based on the selected user interface elements and the properties thereof defined by the user interface definition information (Step 102).

Then, it is determined whether or not there is a manual input for selecting another user interface picture through the keyboard 23 or the software keys 24 (Step 103). It is determined that there is a manual input for selecting another user interface picture, the user interface definition information for the selected user interface picture is read from the nonvolatile memory 14 (Step 104), and the procedure returns to Step 101. Subsequently, the above processing is repeatedly performed.

In the foregoing embodiment, the user interface definition file provided in the nonvolatile memory 14 is set to the memory card to be stored and the user interface definition file is edited by the external device such as the personal computer for modifying and defining the user interface definition information. Alternatively, an editor may be provided in the numerical controller so as to carry out the editing in the numerical controller. Further, the user interface definition file may be directly sent to the external device such as the personal computer through a communication interface to be edited.

According to the present invention, the user interface is easily changed to be customized without changing the system files.

## Claims

1. A numerical controller provided with a user interface, comprising:
user interface element storage means storing a plurality of user interface elements for constituting the user interface;
user interface definition information storage means for storing user interface definition information on a combination of the user interface elements and properties of the user interface elements;
user interface definition information interpreting means for interpreting the user interface definition information;
user interface element selecting means for selecting user interface elements stored in said user interface element storage means in accordance with a result of interpretation of the user interface definition information by said user interface definition information interpreting means; and
user interface element display means for displaying the selected user interface elements in accordance with a result of interpretation of the user interface definition information by said user interface definition interpretation means.

2. A numerical controller according to claim 1, wherein the user interface definition information is stored as a user interface definition file.

3. A numerical controller according to claim 1, wherein said user interface definition information comprises user interface element selecting information including identifiers of the user interface element to be selected, and user interface element property information including information on positions and sizes of the user interface elements to be displayed.

4. A numerical controller according to claim 1, further comprising means for inputting the user interface definition information from an external device to the numerical controller and for outputting the user interface definition information from the numerical controller to the external device.

5. A numerical controller according to claim 1, further comprising editing means for editing the user interface definition information.
